# EUROPEAN PATENT SPECIFICATION

(11) **EP 1 229 322 B1**
(45) Date of publication and mention of the grant of the patent: **31.10.2007**
(21) Application number: 02001815.6
(22) Date of filing: 25.01.2002
(51) Int. Cl.: G01N 21/85, G01N 21/05, G01N 21/03, G02B 6/032

(54) **Cell for analyzing fluid and analyzing apparatus using the same**
Analyseelement für Fluids und Gerät zur Verwendung desselben
Elément d'analyse pour des fluides et appareil pour utilisation de ledit élément

(30) Priority: 29.01.2001 JP 2001020653; 27.09.2001 JP 2001295441
(43) Date of publication of application: 07.08.2002
(73) Proprietor: HORIBA, LTD., Kyoto-shi, Kyoto (JP)
(72) Inventor: Uchimura, Koji, Minami-ku, Kyoto-shi, Kyoto (JP)
(74) Representative: Grünecker, Kinkeldey, Stockmair & Schwanhäusser Anwaltssozietät

(56) References cited:
- EP-A- 0 597 552
- US-A- 5 444 807
- US-A- 5 604 587
- US-A- 6 020 207

## Description

### BACKGROUND OF THE INVENTION

The present invention relates to a cell for analyzing fluid and an analyzing apparatus using the cell.

In the cell for analyzing fluid which is configured in a manner that sample flows therein, an irradiation portion for irradiating light toward the sample is disposed at one end side of the cell, and a detector for detecting the light irradiated from the irradiation portion and transmitted through the sample is disposed at the other end side of the cell, in general, a light path from the irradiation portion is set in view of obtaining the absorbance of the sample and the length of the cell (cell length) is also determined in accordance with the optical length.

As a cell which can suppress the loss of the light irradiated from the irradiation portion to the minimum degree and obtain a sufficient optical length, there is a cell having a long cell length (for example, 1m). Further, there was proposed a long optical length cell which is short in its cell length but large in its sectional area and provided with a complicated reflection structure within the cell to reflect the light from the irradiation portion in several stages thereby to obtain a sufficient optical length.

However, according to the conventional cell for analyzing fluid configured in the aforesaid manner, a light shielding structure is required in order to prevent optical loss that the light from the irradiation portion introduced within the cell leaks outside through the wall of the cell, and also prevent influence of disturbance light transmitted through the cell wall and entered into the cell. Further, the conventional cell requires a large-sized optical axis adjusting mechanism (an optical system adjusting mechanism) with an aperture, lens etc. in order to suitably introduce the light from the irradiation portion within the cell and further introduce to the detector.

Further, the cell with the reflection structure therein has a problem that a precise and complicated reflection structure is required and a volume of the cell becomes larger in order to obtain a sufficient optical length due to the reflection.

Further, according to the conventional cell for analyzing fluid configured in the aforesaid manner, the volume of the cell is large since the cell is configured in a linear shape or the reflection structure is provided within the cell, so that the space for disposing the cell itself becomes large and much sample is required. In addition, since the cell is required to be provided with the aforesaid additional mechanism, there arises a problem that the space for disposing the cell becomes further larger.

Further, according to the conventional cell, in the case of changing the cell length, the hardware (for example, the analyzing apparatus using the cell) is required to be changed entirely and so the cell length cannot be changed easily.

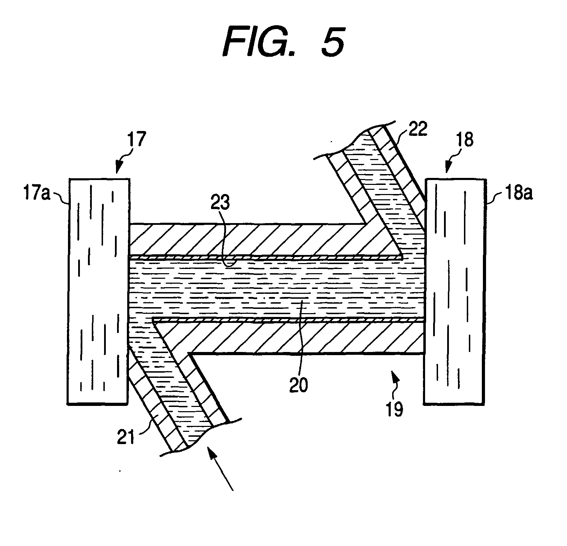

Further, as another conventional cell for analyzing fluid, there is a flow cell which is provided with a housing 19 having a first end portion 17 and a second end portion 18 as shown in Fig. 5. The first end portion 17 is provided so as to oppose to a not-shown light source and has a transparent window portion 17a (light is guided within an inner flow path through the window portion from the not-shown light source). The second end portion 18 is provided so as to oppose to a not-shown sensor for detecting the light from the light source and has a transparent window portion 18a (the light is introduced to the outside, that is, the sensor side from the inner flow path through the window portion).

The housing 19 has an inner flow path 20 formed linearly from the first end portion 17 to the second end portion 18, an inlet 21 for introducing liquid sample to the first end portion 17, and an outlet 22 for extruding the liquid sample within the inner flow path 20.

According to the aforesaid cell for analyzing fluid, the inner wall forming the inner flow path 20 is covered by Teflon (trade mark) AF which is material 23 having a refraction index smaller than that of water. Thus, the light directed to the sensor from the light source through the liquid sample within the inner flow path 20 travels within the inner flow path 20 while being internally reflected almost completely by the material 23, so that the loss of light is suppressed.

However, according to the cell for analyzing fluid thus configured, in the case of changing the cell length in correspondence with the nature, kinds etc. of the liquid sample serving as a subj ect to be measured, it is required to use another housing having an inner flow path with a different length. In other words, it is difficult to change the cell length by using only one housing. Further, according to the cell for analyzing fluid configured in the aforesaid manner, a subject capable of being measured is limited to liquid samples having a refraction index larger than that of the material 23.

US 5,604,587 describes a long capillary waveguide raman cell. The waveguide is in the form of a capillary having a reflective surface defined by a material having a refractive index of less than 1.33. Excitation light is transmitted axially into the liquid at an end of the waveguide. The excitation light is transmitted the length of the waveguide by reflection from the reflective surface, causing the fluid which is disposed within the waveguide to emit raman spectra.

US 5,444,806 describes micro chemical analysis employing flowthrough detectors. Therein it is described that the chemical properties of a flowing liquid analyte are determined by liquid chromatography or capillary electrophoreses wherein the analyte is caused to flow through an optical waveguide. The waveguide is a rigid capillary having a refractive index of less than 1.33. Measurement light is launched axially into the analyte by inserting an optical fiber, coupled to a light source, into one end of the waveguide.

US 6,020,207 discloses an optical analysis technique and sensors for the use therein. This document discloses that the detection of a chemical species of interest is accomplished by immobilizing sensing molecules on the inner wall of a liquid core optical waveguide. The waveguide comprises a capillary tube and the sensing molecules are selected to interact with the species of interest carried by the liquid which forms the waveguide core.

### SUMMARY OF THE INVENTION

The invention has been made in view of the aforesaid matter, and an object of the invention is to provide a cell for analyzing fluid and an analyzing apparatus using the cell which can improve the degree of freedom as to the arrangement of the cell, be disposed at a small space, obtain a sufficient optical length by a small amount of sample, does not require a large-sized light shielding mechanism nor an additional many constituent parts and can change the optical length easily.

In order to attain the aforesaid obj ect, a cell for analyzing fluid according to claim 1 is provided wherein the cell for analyzing fluid is configured in a manner that sample flows therein and irradiation light passes through the sample, the cell includes an inner tube in which the sample passes, a protection tube formed on an outside of the inner tube to hold shape of the inner tube, and a reflection layer formed between the inner tube and the protection tube to reflect the light passing within the inner tube.

The protection tube may have a function of preventing light incident from outside from transmitting on the inner tube side.

According to the cell for analyzing fluid configured in the aforesaid manner, the reflection layer can prevent light introduced within the inner tube from the irradiation portion from leaking outside, and the protection tube can prevent disturbance light from entering within the cell, so that it is not necessary to separately provide a light shielding mechanism for preventing the light passing within the inner tube from leaking outside and preventing the disturbance light from entering within the inner tube. Further, since the light from the irradiation portion passes within the inner tube while being repeatedly reflected by the reflection layer, it is not necessary to separately provide a large-sized optical axis adjusting mechanism such as an aperture, lens etc. for suitably introducing the light from the irradiation portion to the detector. That is, according to the cell for analyzing fluid of the invention, since additive constructions such as the aforesaid light shielding mechanism and the optical axis adjusting mechanism are not required, the configuration of the cell can be simplified and the cell itself can be disposed at a smaller space.

According to the cell for analyzing fluid configured in the aforesaid manner, the light from the irradiation portion passes within the inner tube and is directed to the detector while being repeatedly reflected by the reflection layer. In this case, since the reflection layer is formed along the outside of the inner tube, there arises no problem even when the inner diameter of the inner tube is made small. In addition, when the inner diameter of the inner tube is made small, it becomes possible to dispose the cell itself at a smaller space and an optical length with a sufficient length can be obtained by a small amount of the sample.

Further, the cell for analyzing fluid configured in the aforesaid manner can be formed by bending freely in a range not causing a trouble in the light transmission from the irradiation portion to the detector. That is, since the degree of freedom of the shape of the cell is high, the cell can be disposed at a smaller space as compared with the conventional cell which is low (zero) in the degree of freedom of the shape of the cell such that the cell can not be bent.

Since the reflection layer is formed to be an air layer, the reflection layer can be formed by merely inserting the inner tube into the protection tube within the atmosphere, for example, so that it is possible to fabricate the cell for analyzing fluid at a lower cost and easily. Further, since the air layer with a quite small refractive index is used as the reflection layer, the difference of the refractive index between the inner tube and the reflection layer can be made quite large as compared with the conventional cell for analyzing fluid shown in Fig. 5 in which Teflon (trade mark) AF is used as the reflection layer, for example. Thus, the light introduced within the inner tube from the irradiation portion can be more surely prevented from leaking outside. Further, in the conventional cell for analyzing fluid shown in Fig. 5, the light passing through the liquid sample within the inner flow path 17 is reflected by Teflon (trade mark) which is material having a refractive index smaller than that of the water, so that a subject to be measured is limited to material having a refractive index larger than that of Teflon (trade mark). However, as described above, in the cell for analyzing fluid of the invention in which the air layer with a quite small refractive index is used as the reflection layer, various kinds of the samples can be used as a subject to be measured. Further, the cell for analyzing fluid according to the aforesaid configuration is particularly suitable when used in a case where such an excellent effect that the loss of the light from the irradiation portion is small is more important, that is, a case where the cell is required to be bent in a U shape, for example.

Further, each of the inner tube, the protection tube and the reflection layer may have flexibility and bend freely.

According to the cell for analyzing fluid configured in the aforesaid manner, the degree of the freedom of the shape of the cell becomes very high. Thus, in a case of changing the optical length, it is not necessary to change the hardware configuration element(s) of the analyzing apparatus using the cell such as the irradiation portion, the detector etc., and the optical length can be changed easily by suitably changing the shape of the cell or cutting a part of the cell.

An analyzing apparatus according to claim 2 using the cell for analyzing fluid according to claim 1 may be arranged in a manner that in the analyzing apparatus comprising the cell for analyzing fluid configured_to flow sample therein, an irradiation portion disposed at one end side of the cell for irradiating light toward inside of the cell, and a detector disposed at the other end side of the cell for detecting light passing through the inside of the cell from the irradiation portion, the cell includes an inner tube in which the sample passes, a protection tube formed on an outside of the inner tube to hold shape of the inner tube, and a reflection layer formed between the inner tube and the protection tube to reflect the light passing within the inner tube.

The analyzing apparatus configured in the aforesaid manner is the analyzing apparatus using the cell for analyzing fluid according to first aspect, and the effect similar to that obtained from the cell for analyzing fluid according to the first aspect can be obtained. Further, since the cell for analyzing fluid can be disposed at a smaller space, the entire configuration of the apparatus can be made compact.

Further, the protection tube may have a function of preventing light incident from outside from transmitting on the inner tube side.

Since the reflection layer is formed to be an air layer, the reflection layer can be formed by merely inserting the inner tube into the protection tube within the atmosphere, for example, so that it is possible to fabricate the analyzing apparatus using the cell for analyzing fluid at a lower cost and easily. Further, since the air layer with a quite small refractive index is used as the reflection layer, the difference of the refractive index between the inner tube and the reflection layer can be made quite large as compared with the conventional cell for analyzing fluid shown in Fig. 5 in which Teflon (trade mark) AF is used as the reflection layer, for example. Thus, the light introduced within the inner tube from the irradiation portion can be more surely prevented from leaking outside. Further, in the conventional cell for analyzing fluid shown in Fig. 5, the light passing through the liquid sample within the inner flow path 17 is reflected by Teflon (trade mark) which is material having a refractive index smaller than that of the water, so that a subject to be measured is limited to material having a refractive index larger than that of Teflon (trade mark). However, as described above, in the cell for analyzing fluid of the invention in which the air layer with a quite small refractive index is used as the reflection layer, various kinds of the samples can be used as a subject to be measured. Further, the cell for analyzing fluid according to the aforesaid configuration is particularly suitable when used in a case where such an excellent effect that the loss of the light from the irradiation portion is small is more important, that is, a case where the cell is required to be bent in a U shape, for example.

Further, each of the inner tube, the protection tube and the reflection layer may have flexibility and bend freely.

According to the analyzing apparatus configured in the aforesaid manner, the degree of the freedom of the shape of the cell becomes very high. Thus, in a case of changing the optical length, it is not necessary to change the hardware configuration element(s) of the analyzing apparatus using the cell such as the irradiation portion, the detector etc., and the optical length can be changed easily by suitably changing the shape of the cell or cutting a part of the cell.

### BRIEF DESCRIPTION OF THE PREFERRED EMBODIMENTS

Fig. 1 is an explanatory diagram for schematically showing the configuration of an analyzing apparatus using a cell for analyzing fluid according to the embodiment of the invention;
Fig. 2 is an explanatory diagram for schematically showing the configuration of the cell for analyzing fluid according to the embodiment;
Fig. 3A is an explanatory diagram for schematically showing the configuration of a modified example of the cell for analyzing fluid;
Fig. 3B is an explanatory diagram for schematically showing the configuration of another modified example of the cell for analyzing fluid;
Fig. 4A is a longitudinal sectional diagram for schematically showing the configuration of the cell for analyzing fluid according to the second embodiment of the invention;
Fig. 4B is a longitudinal sectional diagram for schematically showing the configuration of the cell for analyzing fluid according to the third embodiment of the invention; and
Fig. 5 is an explanatory diagram for schematically showing the configuration of a conventional cell for analyzing fluid.

### DETAILED DESCRIPTION OF THE PREFERRED EMBODIEMENTS

The embodiment of the invention will be explained with reference to the accompanying drawings.

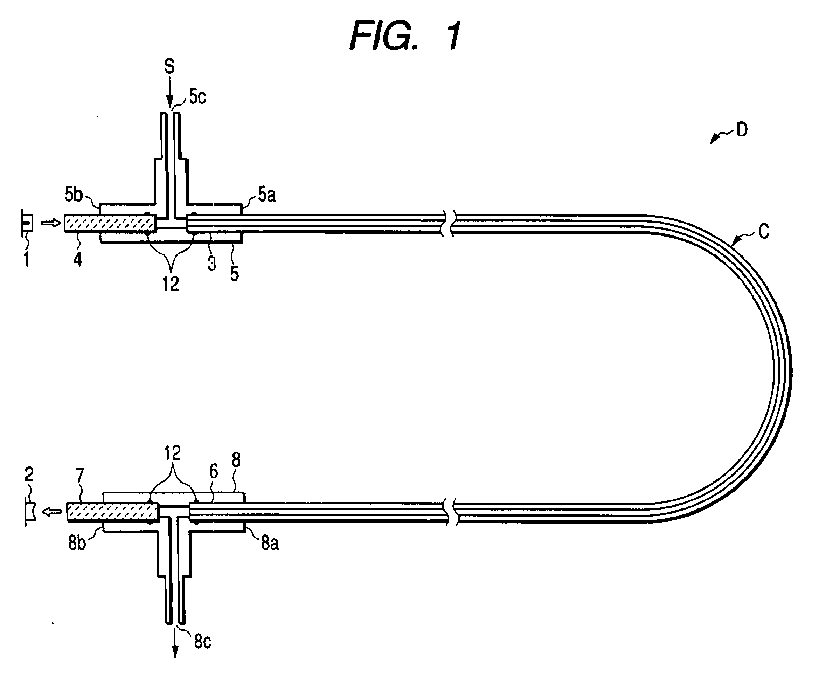

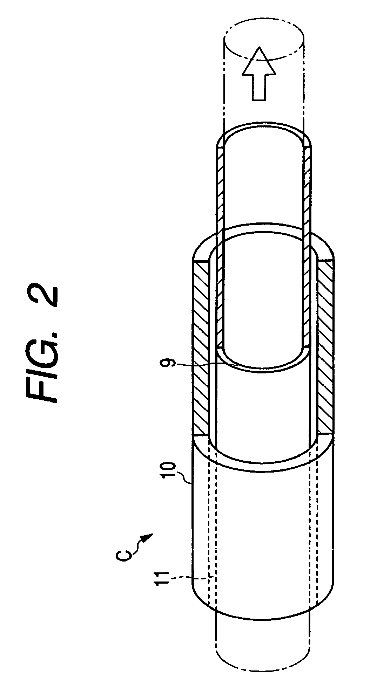

Fig. 1 is an explanatory diagram for schematically showing the configuration of an analyzing apparatus D using a cell C for analyzing fluid (hereinafter called a cell) according to the embodiment of the invention, and Fig. 2 is an explanatory diagram for schematically showing the configuration of the cell C.
The analyzing apparatus D includes the cell C configured to flow sample S therein; an irradiation portion 1 which is disposed at the one end side of the cell C and irradiates light toward the inside of the cell C; a detector 2 which is disposed at the other end side of the cell C and detects the light irradiated from the irradiation portion 1 and passed through the inside of the cell C; a first coupling member 5 to which the one end 3 of the cell C and a transmission window member 4 through which the light from the irradiation portion 1 transmits are coupled in such a state that the one end and the transmission window member are opposed to each other, and to which an introduction path (not shown) for introducing the sample S, reference water (not shown) etc. into the cell C is coupled; and a second coupling member 8 to which the other end 6 of the cell C and a transmission window member 7 through which the light passed within the cell C transmits are coupled in such a state that the other end and the transmission window member are opposed to each other, and to which an extruding path (not shown) for extruding the sample S, reference water (not shown) etc. supplied within the cell C is coupled.

The cell C is formed in an almost U-shape and configured by an inner tube 9 within which the sample S passes; a protection tube 10 which is formed at the outside of the inner tube 9 to hold the shape of the inner tube 9 and prevents external light from transmitting on the inner tube 9 side; and a reflection layer 11, formed between the inner tube 9 and the protection tube 10, for reflecting the light passing within the inner tube 9.

The inner tube 9 is a tube formed by material with quality such as FEP resin, glass etc. (that has such a property as acid resistance, alkali resistance etc. and so does not chemically react with the sample S) that transmits the light from the irradiation portion 1 and does not cause change of properties nor deformation such as corrosion, dissolution, softening etc. Further, this inner tube is formed such that the inner diameter thereof is 2mm or less, for example.

When the inner tube 9 is configured in the aforesaid manner, this inner tube may be flexible or not. Further, needless to say, the properties of the inner tube 9 is determined by the sample S and necessarily may not have the aforesaid properties.

The protection tube 10 is a tube formed by metal (stainless etc.), resin (nylon etc.). The protection tube 10 may have such a heat insulation structure in accordance with the place where the cell C is used that the periphery of the protection tube 10 is covered by heat insulation material or the protection tube 10 is formed by the heat insulation material.

The reflection layer 11 is a layer formed by material (irrespective of solid or fluid) that can obtain a suitable refractive index (a refractive index smaller than that of the material forming the inner tube 9). For example, this reflection layer may be an air layer. In this case, when the inner tube 9 is inserted within the protection tube 10 in the atmosphere, the air layer is necessarily formed between the inner tube 9 and the protection tube 10. Further, when the reflection layer 11 is formed by the air layer, it is possible to fabricate the cell C and the analyzing apparatus D with a lower cost.

In this respect, the reflection layer 11 is not limited to the air layer, and may be formed by filling gas other than air (such as inactive gas) limited in its refractive index between the inner tube 9 and the protection tube 10, for example.

Alternatively, light reflection means such as A1, Au etc. having a property of reflecting light may be formed by coating, winding or depositing on the outer periphery of the inner tube 9. In this case, resin, glass etc. may be employed as the inner tube 9. Further, in this case, it becomes possible to shield disturbance light badly influencing on the measurement by using the reflection material. Thus, it is not necessary to provide the protection tube 10 when the inner tube 9 is not flexible, or when the inner tube 9 has such a degree of intensity not being deformed easily or the shape of the inner tube 9 is held sufficiently by the light reflection means even if the inner tube 9 is flexible. The light reflection means may be used together with the reflection layer 11, or either one of the reflection layer 11 and the light reflectionmeans maybe provided

The inner diameter of the inner tube 9 and the length of the cell C may be set arbitrarily in accordance with the amount and absorbance of the sample S.

The light irradiated from the irradiation portion 1 may be near infrared ray or visible light, for example.

The material of the transmission window member 4 may be glass, resin etc., and may be formed by crystal (for example, monocrystal of KBr) etc. in accordance with the wavelength of the light to be detected by the detector 2 and the subject to be measured. Further, the transmission window member 4 may be formed in a thin film shape or a thin plate shape, or a thick plate shape or a pillar shape.

The first coupling member 5 is configured in an almost T shape, for example, and has a cell coupling port 5a to which the one end 3 of the cell C is coupled, a transmission window coupling port 5b which is closed or blocked by being coupled to the transmission window member 4, and an introducing path coupling port 5c to which the introducing path is coupled. The cell coupling port 5a, the transmission window coupling port 5b and the introducing path coupling port 5c are communicated from one another, and the one end 3 of the cell C in a state of being coupled to the cell coupling port 5a and the transmission window member 4 in a state of being coupled to the transmission window coupling port 5b are disposed to oppose to each other.

The respective coupling ports 5a, 5b, 5c of the first coupling member 5 are coupled to the one end 3 of the cell C, the transmission window member 4, and the introducing path through sealing members 12 such as O rings so that water does not leak from the coupling portions.

The quality of material and the shape of the transmission window member 7 are similar to those of the transmission window member 4.

The second coupling member 8 is configured in an almost T shape, for example, and has a cell coupling port 8a to which the other end 6 of the cell C is coupled, a transmission window coupling port 8b which is closed or blocked by being coupled to the transmission window member 7, and an extruding path coupling port 8c to which the extruding path is coupled. The cell coupling port 8a, the transmission window coupling port 8b and the extruding path coupling port 8c are communicated from one another, and the other end 6 of the cell C in a state of being coupled to the cell coupling port 8a and the transmission window member 7 in a state of being coupled to the transmission window coupling port 8b are disposed to oppose to each other.

The respective coupling ports 8a, 8b, 8c of the second coupling member 8 are coupled to the other end 6 of the cell C, the transmissionwindowmember 7 and the extruding path through sealing members 12 such as O rings so that water does not leak from the coupling portions.

Since each of the first coupling member 5 and the second coupling member 8 is configured in the almost T shape, each of these members can be easily attached newly after replacing the cell with another cell C with a different length or changing the length of the cell C by cutting the one end or the both ends of the cell C by a suitable length.

Next, the operation of the analyzing apparatus D configured in the aforesaid manner will be explained.
In the analyzing apparatus D configured in the aforesaid manner, the sample S introduced within the first coupling member 5 from the introducing path coupling port 5c through the introducing path is not directed to the transmission window coupling port 5b side blocked by the transmission window member 4 but extruded within the inner tube 9 of the cell C from the one end 3 of the cell C coupled to the cell coupling port 5a. Then, the sample S introduced within the second coupling member 8 from the cell coupling port 8a passing through the inner tube 9 is not directed to the transmission window coupling port 8b side blocked by the transmission window member 7 but extruded from the extruding path coupled to the extruding path coupling port 8c.

When the light is irradiated from the irradiation portion 1 toward the sample S in a state of being accommodated inside of the inner tube 9 of the cell C, the light transmitted through the transmission window member 4 is introduced within the cell C from the one end 3 of the cell. In this respect, in a case where the sample S is water, for example, the refraction index of the sample S (water) is smaller than that of the inner tube 9, and the refraction index of the inner tube 9 is larger than that of the reflection layer 11 (the air layer). To be more concrete, the relation of the refraction indexes among the sample S, the inner tube 9, the reflection layer 11 (the air layer) is middle, large, small, respectively. When the light passing within the sample S transmits the inner tube 9, the light thus transmitted is reflected by the reflection layer 11 having the refraction index smaller than that of the inner tube 9 and directed to the center side of the inner tube 9. In this case, almost of the light reflected by the reflection layer 11 transmits through the inner tube 9 and reaches the sample S side. In this manner, the light from the irradiation portion 1 travels within the cell C, then is extruded from the other end 6 of the cell C, then transmitted through the transmission window member 7 and reaches the detector 2.

The sample S is analyzed in the following manner by using the analyzing apparatus D configured in this manner. That is, first, the sample S is accommodated within the cell C, then in this state, predetermined light is irradiated from the irradiation portion 1 toward the sample S within the cell C, and the light transmitted within the cell C is detected by the detector 2. The transmittivity or transmission factor, absorbance etc. of the sample S can be obtained based on the output of the detector 2 thus obtained and the output of the detector 2 obtained by performing the operation similar to the aforesaid operation by using the reference water.

At the time of analyzing the sample S, the sample S may be in a state of flowing or being stationary.

The cell C configured in the aforesaid manner can be formed by bending freely within a range not interfering the light transmission from the irradiation portion 1 to the detector 2. Thus, even when the cell is required to be long in its optical length and so the cell C itself is made long, the cell can be disposed in a space smaller than that for a cell that can not be bent, by forming the cell in a U shape, for example. Further, the analyzing apparatus D using the cell C can be made compact in its entire configuration by the similar reason. Since the cell C and the analyzing apparatus D have the aforesaid merits, they can be housed within smaller casings, for example.

According to the cell C configured in the aforesaid manner, even if the inner diameter of the inner tube 9 is set to be small (for example, 2mm or less), the light from the irradiation portion 1 reaches the detector 2 without being lost largely, so that the inner diameter of the inner tube 9 can be made small to make the inner volume of the inner tube 9 small without causing disadvantage. Thus, the diameters of the reflection layer 11 and the protection tube 10 formed on the outer side of the inner tube 9 can also be made small, whereby the cell C can be formed to be thinner and smaller and further the required amount of the sample S can also be made small. For example, in a case where the optical length from the irradiation portion 1 to the detector 2 is 1m, when the inner diameter of the inner tube 9 is set to be 1mm, the inner volume of the inner tube 9 can be reduced to about 3m1. Further, the analyzing apparatus D using the cell C can be made compact in its entire configuration by the similar reason, and the required amount of the sample S can also be made small.

According to the cell C and the analyzing apparatus D configured in the aforesaid manner, the single member (the protection tube 10) is provided with a function of holding the shape of the inner tube 9 and a light shielding function for preventing the light incident from the outside of the cell C from traveling to the inner tube 9 side, so that none of a large-scaled light shielding mechanism or additional many constituent parts are required.

Further, according to the cell C and the analyzing apparatus D configured in the aforesaid manner, since the light from the irradiation portion 1 passes within the inner tube 9 while being reflected by the reflection layer 11, optical loss is quite small and further the cell C itself can be bent while maintaining such an effect. When the configuration of the cell C is changed suitably in this manner, it is possible to freely replace the cell C with another cell with a different length without changing the relative distance between the irradiation portion 1 and the detector 2, for example. That is, in a case of replacing the cell C with another cell with a different length, it becomes possible to eliminate the change of the hardware configuration element(s) (for example, the shifting of the position of the detector 2, the replacement of one which can alternate the space being made shorter in the length of the cell C). When the length of the cell C is changed in this manner, it is merely required to adjust the sensitivity thereof.

Further, since the cell C itself is not surrounded by a hard frame etc., the cell C can be changed into a cell C with a different cell length by merely cutting the other end 6 side (alternatively, may be the one end 3 side or both the end 3, 6 sides) of the cell C at a work site thereby to merely couple the other end 6 (alternatively, may be the one end 3 or both the ends 3, 6) of the cell C newly formed in this manner to the coupling member, for example.

Further, according to the analyzing apparatus D configured in the aforesaid manner, since the both ends of the cell C can be freely attached to and detached from the cell coupling port 5a of the first coupling member 5 and the cell coupling port 8a of the second coupling member 8, the change of the length of the cell C (that is, the replacement or the cutting of the cell C) can be performed easily.

According to the cell C and the analyzing apparatus D configured in the aforesaid manner, since the measurement can be performed even with a small amount of the sample S by making the optical length longer, the cell and the analyzing apparatus are particularly effective when used in the measurement such as absorbance, transmittivity etc. for measuring a small amount of coexisting material (including dissolved material) within pure water or ultrapure water at a high sensitivity.

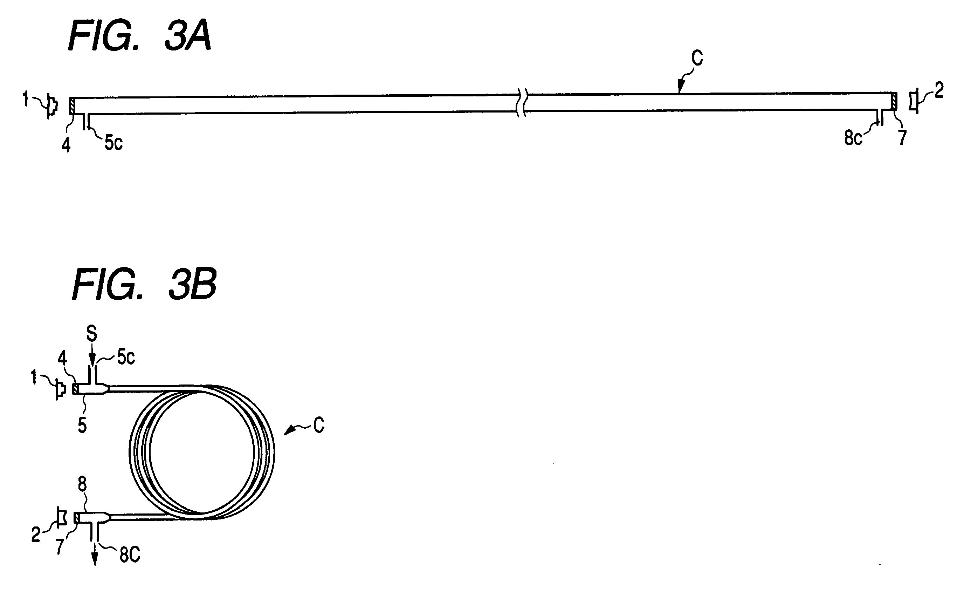

Incidentally, the configuration of the cell C is not limited to the almost U shape but may be various shapes. For example, the cell may be formed in an almost linear shape as shown in Fig. 3A or in an almost spiral shape as shown in Fig. 3B.

Each of the first coupling member 5 and the second coupling member 8 may be prepared as a dedicated one, but alternatively, may be formed by using a three-way joint generally in the market, for example.

Further, according to the analyzing apparatus D configured in the aforesaid manner, the irradiation portion 1 is provided so as to be directed to the transmission window member 4 coupled to the first coupling member 5 and the detector 2 is provided so as to be directed to the transmission window member 7 coupled to the second coupling member 8. However, the embodiment is not limited to this configuration, and the detector 2 may be provided so as to be directed to the transmission window member 4 coupled to the first coupling member 5 and the irradiation portion 1 may be provided so as to be directed to the transmission window member 7 coupled to the second coupling member 8, for example.

The cell C may be used as a single unit, but alternatively a plurality of the cells C, C, --- may be used as a single unit in a state of being coupled in series or in parallel. Even when the cells are configured in the latter case, since the space in which each cell C is disposed can be made small, the entire size of the apparatus can scarcely be made large. When a plurality of the cells C, C, --- having respectively different lengths (optical lengths) are coupled in series or in parallel, it becomes possible to simultaneously analyze the sample S at different optical lengths. Further, the cell C formed to have a short length, that is, a short optical length is suitable for analyzing the sample S of a high density, while the cell C formed to have a long optical length is suitable for analyzing the sample S of a low density. Thus, the sample S may be analyzed by using only one or plural cells C, C, -- suitable for the analysis among all the cells C, C, --- being coupled in view of the density of the sample S.

The cells C can be coupled to each other in a manner, for example, that the extruding path coupling port 8c of the second coupling member 8 of the one cell C is coupled to the introducing path coupling port 5c of the first coupling member 5 of the other cell C by means of a suitable tube or a suitable coupling member.

Further, of course, in the case of coupling the plurality of the cells C, C, ---, it is not necessary to unify the configurations of the respective cells C and so various configurations of the cells C, C, --- may be coupled.

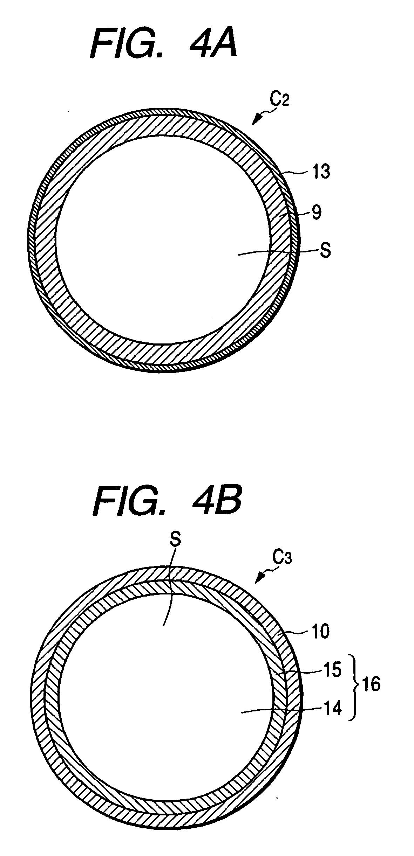

Fig. 4A is a longitudinal sectional view schematically showing the configuration of the cell C₂ for analyzing fluid (hereinafter called as a cell) according to a second embodiment of the invention. In this figure, members having the same structures as those of the first embodiment are marked with the same references and the explanation thereof is omitted
The cell C₂ of the second embodiment differs from the cell C of the first embodiment in a point that light reflection means 13 is provided in place of the protection tube 10 and the reflection layer 11. That is, the cell C₂ is configured in a manner that the sample S flows therein and irradiated light passes through the sample S. Thus, the cell includes an inner tube 9 within which the sample S passes and the light reflection means 13 which is provided on the outer surface of the inner tube 9 to prevent light incident from the outside from transmitting on the inner tube 9 side.

The light reflection means 13 has a property of reflecting light like A1, Au etc., and is formed on the outer surface of the inner tube 9 by a processing such as coating, winding or deposition. The material of the inner tube 9 may be determined by taking into consideration that the light reflection means 13 is formed thereon, and so the material may be resin, glass etc., for example.

According to the cell C₂ configured in the aforesaid manner, the light reflection means 13 has the function of the reflection layer 11 of the first embodiment and a function of shielding the light incident from the outside of the protection tube 10. The effect obtained from the cell C₂ thus configured is almost same as that of the cell C of the first embodiment. However, according to the cell of this embodiment, since it is not necessary to use the protection tube 10, it is possible to make the configuration thereof more compact.

In order to stabilize the shape of the cell C₂ configured in the aforesaid manner, for example, the inner tube 9 may be made not flexible, or the inner tube 9 may be made to have such a degree of intensity not being deformed easily or the shape of the inner tube 9 may be held by the light reflection means 13 even if the inner tube 9 is flexible.

Fig. 4B is a longitudinal sectional view schematically showing the configuration of the cell C₃ for analyzing fluid (hereinafter called as a cell) according to a third embodiment of the invention. In this figure, members having the same structures as those of the first embodiment are marked with the same references and the explanation thereof is omitted
The cell C₃ of the third embodiment is configured in a manner that the sample S flows therein and irradiated light passes through the sample S. Thus, the cell includes an optical fiber 16 configured by a hollow core 14 in which the sample S flows and a clad 15 formed on the outside of the core 14 and reflecting light passing within the core 14, and a protection tube 10 which holds the shape of the optical fiber 16 and prevents light incident from the outside from transmitting to the optical fiber 16 side.

The clad 15 has a refractive index smaller than that of the sample S and formed by material (that is, material which does not cause change of properties nor deformation such as corrosion, dissolution, softening etc. by the sample S and has such a property as acid resistance, alkali resistance etc.) which does not absorb light of a wavelength necessary for the measurement and does not chemically react with the sample S.

According to the cell C₃ configured in the aforesaidmanner, when light is irradiated from the one end side of the cell C₃ toward the sample S in a state of being accommodated within the core 14, the light passes within the core 14 and reaches the other end side of the cell C₃ while being repeatedly reflected by the clad 15 having the refractive index smaller than that of the sample S.

The cell C₃ configured in the aforesaidmanner can be formed by being bent freely within a range not badly affecting on the light transmission.

Further, according to the cell C₃ configured in the aforesaid manner, since the light reaches the other end side of the cell from the one end side thereof without being lost largely even when the core 14 is set to be small in its inner diameter (for example, 2mm or less), the core 14 can be set to be small in its inner diameter thereby to make small the inner volume of the core 14 without causing any inconvenience.

Further, according to the cell C₃ configured in the aforesaid manner, since the single member (the protection tube 10) is provided with a function of holding the shape of the core 14 and a light shielding function for preventing the light incident from the outside of the cell C₃ from traveling to the optical fiber 16 side, so that none of a large-scaled light shielding mechanism or additional many constituent parts are required.

Further, according to the cell C₃ configured in the aforesaid manner, since the light passes within the core 14 while being reflected by the clad 15, the loss of the light is quite small and the cell C₃ itself can also be bent freely while maintaining such an effect.

According to the cell C₃ configured in the aforesaid manner, since the cell C₃ itself is not surrounded by a hard frame etc., the cell C₃ can be changed into a cell C₃ with a different cell length by merely cutting the other end side (alternatively, may be the one end side or both the end sides) of the cell C₃ at a work site thereby to merely couple the other end (alternatively, may be the one end or both the ends) of the cell C₃ newly formed in this manner to the coupling member, for example.

According to the cell C₃ configured in the aforesaidmanner, since the measurement can be performed even with a small amount of the sample S by making the optical length longer, the cell and the analyzing apparatus are particularly effective when used in the measurement such as absorbance, transmittivity etc. for measuring a small amount of coexisting material (including dissolved material) within pure water or ultrapure water at a high sensitivity. Incidentally, the protection tube 10 can be eliminated when the clad 15 is configured to hold the light shielding function for the light incident from the outside and the shape holding function.

As clear from the aforesaid description, the core 14 of the third embodiment in a state of accommodating the sample S therein corresponds to the inner tube 9 of the first embodiment in the state of accommodating the sample S therein, and the clad 15 of the third embodiment corresponds to the reflection layer 11 of the first embodiment. Thus, the effect obtained from the cell C₃ configured in the aforesaid manner is almost same as the effect obtained from the cell C of the first embodiment, and so the further explanation of the effect of the third embodiment is omitted.

Of course, the various kinds of the modification examples etc. capable of being implemented in the first embodiment is also applicable to the cell C₃ of the third embodiment.

As described above, according to the invention configured in the aforesaid manner, it is possible to provide a cell for analyzing fluid and an analyzing apparatus using the cell which can improve the degree of freedom as to the arrangement of the cell, be disposed at a small space, obtain a sufficient optical length by a small amount of the sample, does not require a large-sized light shielding mechanism nor an additional many constituent parts and can change the optical length easily.

## Claims

1. A cell (C) for analyzing fluid configured in a manner that sample flows therein and irradiation light passes through the sample (S), said cell comprising:
an inner tube (9) in which the sample passes (S), the inner tube (9) having light transmissivity and flexibility;
**characterized by**
a protection tube (10) positioned outside of the inner tube (9) and having flexibility, wherein an inner circumference of the protection tube (10) being greater than an outer circumference of the inner tube (9); and
an air layer (11) acting as a reflection layer formed between the inner tube (9) and the protection tube (10) to reflect the light passing within the inner tube (9),
wherein the light passing the sample (S) transmits the inner tube (9) and then reflects at the air layer (11) having a refraction index lower than that of the inner tube and the reflected light transmits the inner tube and enters the sample so as to pass in the sample (S) in the inner tube (9).

2. An analyzing apparatus comprising:
a cell (C) for analyzing fluid as claimed in claim 1;
an irradiation portion (1) disposed at one end side of the cell for irradiating light toward inside of the cell; and
a detector (2) disposed at the other end side of the cell for detecting light passing through the inside of the cell from the irradiation portion.

## Patentansprüche

1. Zelle (C) zum Analysieren eines Fluids, die in einer Weise konfiguriert ist, dass ein Probe darin fließt und Bestrahlungslicht durch die Probe (S) hindurchtritt, wobei die Zelle folgendes umfasst:
eine innere Röhre (9), in der die Probe (S) durchgeht, wobei die innere Röhre lichtdurchlässig und flexibel ist;
**gekennzeichnet durch**
eine Schutzröhre (10), die außerhalb der inneren Röhre (9) angeordnet ist und die flexibel ist, wobei ein innerer Umfang der Schutzröhre (10) größer ist als der äußere Umfang der inneren Röhre (9); und
eine Luftschicht (11), die als eine Reflexionsschicht wirkt, die zwischen der inneren Röhre (9) und der Schutzröhre (10) ausgebildet ist, um das Licht zu reflektieren, das innerhalb der inneren Röhre (9) durchgeht,
wobei das Licht, das **durch** die Probe (S) hindurchgeht, die innere Röhre (9) durchstrahlt, und dann an der Luftschicht (11), die einen kleineren Brechungsindex als die innere Röhre (9) hat, reflektiert wird, und wobei das reflektierte Licht die innere Röhre (9) durchstrahlt und in die Probe eintritt, so dass sie **durch** die Probe (S) in der inneren Röhre (9) hindurchgeht.

2. Analysevorrichtung, die folgendes umfasst:
eine Zelle (C) zum Analysieren eines Fluids, wie in Anspruch 1 beansprucht ist;
einen Bestrahlungsabschnitt (1), der an einer Endseite der Zelle angeordnet ist, um Bestrahlungslicht in das Innere der Zelle zu leiten; und
einen Detektor (2), der an der anderen Endseite der Zelle angeordnet ist, um das Licht von dem Bestrahlungsabschnitt, das durch das Innere der Zelle hindurchgegangen ist, zu erfassen.

## Revendications

1. Cellule (C) pour analyser des fluides configurée de telle manière que l'échantillon s'écoule dedans et que la lumière d'irradiation passe à travers l'échantillon (S), ladite cellule comprenant :
un tube intérieur (9) dans lequel l'échantillon (S) passe, le tube intérieur (9) transmettant la lumière et étant flexible ;
**caractérisé par**
un tube de protection (10) positionné à l'extérieur du tube intérieur (9) et étant flexible, dans lequel une circonférence intérieure du tube de protection (10) est plus grande qu'une circonférence extérieure du tube intérieur (9) ; et
une couche d'air (11) agissant comme une couche de réflexion formée entre le tube intérieur (9) et le tube de protection (10) pour réfléchir la lumière passant dans le tube intérieur (9),
dans laquelle la lumière passant dans l'échantillon (S) se transmet au tube intérieur (9) et se réfléchit ensuite au niveau de la couche de réflexion (11) ayant un indice de réfraction inférieur à celui du tube intérieur et la lumière réfléchie se transmet au tube intérieur et entre dans l'échantillon de façon à passer dans l'échantillon (S) dans le tube intérieur (9).

2. Dispositif d'analyse comprenant :
une cellule (C) pour analyser des fluides selon la revendication 1;
une partie d'irradiation (1) disposée à une extrémité de la cellule pour irradier la lumière vers l'intérieur de la cellule ; et
un détecteur (2) disposé à l'autre extrémité de la cellule pour détecter la lumière passant à travers l'intérieur de la cellule depuis la partie d'irradiation.
